# NEUE EUROPÄISCHE PATENTSCHRIFT

(11) **EP 3 129 237 B2**
(45) Veröffentlichungstag und Bekanntmachung des Hinweises auf die Entscheidung über den Einspruch: **18.10.2023**
(45) Hinweis auf die Patenterteilung: 10.06.2020
(21) Anmeldenummer: 15715681.1
(22) Anmeldetag: 07.04.2015
(51) Int. Cl.: B42D 25/328, B42D 25/364, B42D 25/369, B44F 1/10, G03H 1/00, G03H 1/02, B42D 25/425

(54) **VERFAHREN ZUR HERSTELLUNG EINES SICHERHEITSELEMENTS**
METHOD FOR PRODUCING A SECURITY ELEMENT
PROCÉDÉ DE FABRICATION D'UN ÉLÉMENT DE SÉCURITÉ

(30) Priorität: 08.04.2014 DE 102014005156
(43) Veröffentlichungstag der Anmeldung: 15.02.2017
(73) Patentinhaber: Giesecke+Devrient Currency Technology GmbH, 81677 München (DE)
(72) Erfinder: HOFFMÜLLER, Winfried, 83646 Bad Tölz (DE); RAHM, Michael, 83646 Bad Tölz (DE); RAUCH, Andreas, 82441 Ohlstadt (DE)
(74) Vertreter: LKGLOBAL Lorenz & Kopf Patentanwalt Attorney at Law PartG mbB
(86) Internationale Anmeldenummer: PCT/EP2015/000729
(87) Internationale Veröffentlichungsnummer: WO 2015/154866

(56) Entgegenhaltungen:
- EP-A1- 2 117 847
- EP-A2- 0 338 378
- EP-A2- 0 947 254
- EP-A2- 1 129 788
- EP-A2- 1 879 154
- WO-A1-2011/051904
- WO-A1-2011/116425
- WO-A1-2012/079674
- WO-A1-2013/185950
- WO-A2-2005/051675
- WO-A2-2006/108607
- WO-A2-2013/186167
- US-A1- 2009 261 572

## Beschreibung

Die Erfindung betrifft ein Verfahren zur Herstellung eines Sicherheitselements für ein Sicherheitspapier, Wertdokument oder dergleichen mit einem Substrat, das zumindest teilweise mit einer zumindest zwei Schichten umfassenden Beschichtung versehen ist.

Es ist bekannt, in Sicherheitspapieren oder Wertdokumenten, wie beispielsweise Banknoten, Wertpapieren, Ausweiskarten oder anderen fälschungsgefährdeten Papieren, Sicherheitselemente in Form von z. B. Fäden oder im Wesentlichen nicht lang gestreckten, flächigen Elementen (Patches) vorzusehen. Diese Sicherheitselemente weisen zumindest ein, häufig mehrere Sicherheitsmerkmale, wie beispielsweise ein Hologrammelement oder ein Druckdesign, auf.

Im Sinne der Erfindung bezeichnet "Sicherheitspapier" das unbedruckte Papier, das neben einem erfindungsgemäßen Sicherheitselement weitere Echtheitsmerkmale, wie im Volumen vorgesehene Lumineszenzstoffe, einen Sicherheitsfaden oder dergleichen, aufweisen kann. Es liegt üblicherweise in quasi endloser Form vor und wird zu einem späteren Zeitpunkt weiterverarbeitet.

Als "Wertdokument" wird ein Dokument bezeichnet, das für seinen bestimmungsgemäßen Gebrauch fertiggestellt ist. Dabei kann es sich beispielsweise um ein bedrucktes Wertpapier, wie eine Banknote, Urkunde oder dergleichen, eine Ausweiskarte, einen Pass oder ein sonstiges eine Absicherung benötigendes Dokument handeln.

Der Begriff "Wertgegenstand" umfasst neben Wertdokumenten auch Markenartikel und dergleichen.

Die als Sicherheitsmerkmale eingesetzten Mikrostrukturen, wie insbesondere optisch variable Strukturen, werden üblicherweise in einen Prägelack eingeprägt. Im Rahmen der vorliegenden Anmeldung umfasst der Ausdruck "optisch variable Struktur" neben Hologrammen auch hologrammähnliche Beugungsstrukturen, also beispielsweise Strukturen, die kein definiertes Bild, sondern einen verschwommen farbigen Eindruck erzeugen. Ebenso unter dem Ausdruck "optisch variable Struktur" subsumiert werden Beugungsmuster, Strukturen mit Farbkippeffekt, Kinoforme, Strukturen mit einem Mikrolinseneffekt, Strukturen mit isotropen oder anisotropen Streuungseffekten oder mit anderen Interferenzeffekten, Subwellenlängenstrukturen, Mottenaugenstrukturen, Mikrolinsenstrukturen und Mikrostrukturen für Moire-Magnifier oder Modulo Mapper, Mikrospiegelstrukturen und Mikroprismenstrukturen.

Ein zum Einprägen einer Mikrostruktur und insbesondere zum Einprägen einer optisch variablen Struktur in ein Sicherheitselement geeigneter Prägelack muss verschiedene Anforderungen erfüllen. Der Prägelack muss prägbar, metallisierbar, flexibel und releasefähig sein. Zusätzlich sollte er einen gewissen Korrosionsschutz für die Metallisierung bieten.

Die genannten Anforderungen können aber von keinem Prägelack alle gleichzeitig in idealer Weise erfüllt werden. So sind besonders flexible Formulierungen in der Regel nicht gut metallisierbar und oft nicht ausreichend releasefähig. Um guten Korrosionsschutz zu gewährleisten, darf die Formulierung auch bei mechanischer Beanspruchung nicht brechen. Auch sind sehr flexible Lacke unter normalen Härtungsbedingungen an der Oberfläche oft klebrig und daher nicht wickelbar.

Um alle geforderten Eigenschaften möglichst weitgehend zu erfüllen, werden Beschichtungen verwendet, die aus mehreren verschiedenen Schichten bestehen. Die einzelnen Schichten verleihen der Beschichtung dann jeweils bestimmte gewünschte Eigenschaften.

In der Vergangenheit wurden üblicherweise Hologramme mit einer Prägetiefe in einem Bereich von 100 nm bis 400 nm, insbesondere etwa 200 nm bis 300 nm, geprägt. Heutzutage sind auch tiefere Strukturen mit Prägetiefen in einem Bereich von 0,5 µm bis 10 µm verbreitet. Tiefe Prägestrukturen erfordern höhere, prägbare Schichtdicken. Lacke höherer Schichtdicke zeigen häufig eine schlechte Haftung auf den kommerziell verfügbaren Folien. Aus der EP 1 879 154 A2 ist ein Multischichtsystem bekannt, bei dem das Substrat zumindest teilweise mit einer zumindest zwei Schichten umfassenden Beschichtung ausgestattet ist. Das darin beschriebene Herstellungsverfahren umfasst die Schritte Aufbringen einer ersten Schicht auf das Substrat, Aufbringen von zumindest einer zweiten Schicht auf die erste Schicht, wobei vor dem Aufbringen der zweiten Schicht keine vollständige Härtung der ersten Schicht erfolgt, Prägen von zumindest einer Schicht der Beschichtung und vollständiges Härten der Beschichtung. Beim Auftrag der einzelnen Schichten ohne vorherige vollständige Aushärtung der jeweils vorangegangenen Schicht kommt es zu einer diffusionsgetriebenen Vermischung an den Grenzflächen der Schichten. Dieser Vorgang wirkt sich positiv auf die Zwischenschichthaftung aus und führt im Ergebnis zu einer verbesserten Zwischenschichthaftung.

Aus der WO 2012/079674 A1 ist ein Verfahren nach dem Oberbegriff des Anspruch 1 bekannt.

Da die Anordnung der einzelnen, drucktechnisch erhaltenen Schichten im Mehrschichtaufbau in der Praxis nicht registergenau bzw. passergenau vorliegt, kommt die untere, nicht ausgehärtete Schicht in Kontakt mit dem Prägewerkzeug. Das dadurch verursachte Abscheiden von nicht ausgehärtetem Schichtmaterial auf dem Prägewerkzeug kann zu einer Verschlechterung des Prägebilds führen.

Ausgehend davon liegt der vorliegenden Erfindung die Aufgabe zugrunde, ein Verfahren zur Herstellung eines Sicherheitselements bereitzustellen, das die Nachteile des Standes der Technik vermeidet.

Diese Aufgabe wird durch das Verfahren zur Herstellung eines Sicherheitselements mit den Merkmalen des Hauptanspruchs gelöst. Weiterbildungen der Erfindung sind Gegenstand der abhängigen Ansprüche. Zusammenfassung der Erfindung
1. Verfahren zur Herstellung eines Sicherheitselements für ein Sicherheitspapier, Wertdokument oder dergleichen, umfassend ein Substrat, das zumindest teilweise mit einer zumindest zwei Schichten umfassenden, geprägten Beschichtung ausgestattet ist, mit den Schritten:
   a) Aufbringen einer ersten UV-härtenden Schicht, die eine Lackschicht ist, auf das Substrat;
   b) vollständiges Härten der ersten UV-härtenden Schicht;
   c) Aufbringen zumindest einer zweiten UV-härtenden Schicht, die eine Lackschicht ist, auf die vollständig gehärtete erste Schicht;
   d) Prägen der zuletzt aufgebrachten UV-härtenden Schicht mit einem Prägewerkzeug, wobei eine Mikrostruktur eingeprägt wird;
   e) Härten der Beschichtung, wobei das Härten der Schichten durch ultraviolette Strahlung erfolgt und wobei durch das vollständige Härten der ersten UV-härtenden Schicht ein Ablegen auf dem Prägewerkzeug vermieden wird.
   Mit der Formulierung "vollständige Härtung" wird ein Zustand des Prägelacks bezeichnet, in dem der Lack bei üblichen Prägebedingungen keinen oder keinen wesentlichen Beitrag zur gesamten Prägetiefe leistet (d.h. eine vollständig gehärtete Schicht wird nicht, oder im Wesentlichen nicht, geprägt). In diesem Zustand findet auch kein Übertrag von UV-Lack auf das Prägewerkzeug oder auf Walzen statt, falls dieser Kontakt maschinenbedingt nicht vermeidbar ist. Ein vollständiger Umsatz des im UV-Lack befindlichen Photoinitiators oder der vorhandenen Doppelbindungen ist mit "vollständiger Härtung" nicht gemeint.
2. (Bevorzugte Ausgestaltung) Verfahren nach Absatz 1, wobei nach dem Schritt c) und vor dem Schritt d) eine dritte UV-härtende Schicht, die eine Lackschicht ist, auf die zweite Schicht aufgebracht wird, wobei vor dem Aufbringen der dritten Schicht ein vollständiges Härten der zweiten Schicht erfolgt.
3. (Bevorzugte Ausgestaltung) Verfahren nach Absatz 2, wobei nach dem Aufbringen der dritten Schicht weitere UV-härtende Schichten über der dritten Schicht aufgebracht werden und vor dem Aufbringen der einzelnen Schichten jeweils ein vollständiges Härten der jeweils zuvor aufgebrachten Schicht erfolgt.
4. (Bevorzugte Ausgestaltung) Verfahren nach wenigstens einem der Absätze 1 bis 3, wobei vor dem Prägen eine teilweise Härtung der obersten Schicht erfolgt.
5. (Bevorzugte Ausgestaltung) Verfahren nach wenigstens einem der Absätze 1 bis 4, wobei das Aufbringen der Schichten durch ein oder mehrere Verfahren, ausgewählt aus der Gruppe bestehend aus Walzenbeschichtungsverfahren, Spaltbeschichtungsverfahren, Drahtrakelbeschichtungsverfahren, Slot Die Coating, Dip Coating, Spray Coating, Curtain Coating, Air Knife Coating und Druckverfahren, insbesondere Tiefdruck, Flexodruck oder Offsetdruck, erfolgt.
6. (Bevorzugte Ausgestaltung) Verfahren nach wenigstens einem der Absätze 1 bis 5, wobei das Härten durch zusätzliche Temperaturerhöhung.
7. (Bevorzugte Ausgestaltung) Verfahren nach wenigstens einem der Absätze 1 bis 6,wobei im Schritt d) eine Mikrospiegelstruktur, eine Mikrolinsenstruktur oder eine Mikrosprismenstruktur, eingeprägt wird.
8. (Bevorzugte Ausgestaltung) Verfahren nach einem der Absätze 1 bis 7, wobei das Sicherheitselement in Form eines Sicherheitsbandes oder Sicherheitsstreifens ausgebildet ist.
9. (Bevorzugte Ausgestaltung) Verfahren nach einem der Absätze 1 bis 7, wobei das Sicherheitselement in Form eines Patches oder eines sonstigen flächigen Sicherheitselements ausgebildet ist.
10. (Bevorzugte Ausgestaltung) Verfahren nach einem der Absätze 1 bis 9, wobei eine oder mehrere der Schichten (Farb-)Pigmente, Fluoreszenzstoffe, Phosphoreszenzstoffe oder magnetische Stoffe enthalten.
11. (Bevorzugte Ausgestaltung) Verfahren nach einem der Absätze 1 bis 10, wobei in zumindest einer Schicht der Beschichtung zumindest eine strahlenvernetzbare Komponente enthalten ist.
12. (Bevorzugte Ausgestaltung) Verfahren nach einem der Absätze 1 bis 11, wobei in allen Schichten der Beschichtung jeweils zumindest eine strahlenvernetzbare Komponente enthalten ist.
13. (Bevorzugte Ausgestaltung) Verfahren nach Absatz 11 oder 12, wobei in zumindest einer Schicht der Beschichtung zumindest ein Photoinitiator enthalten ist oder in allen Schichten der Beschichtung jeweils zumindest ein Photoinitiator enthalten ist.
14. (Bevorzugte Ausgestaltung) Verfahren nach wenigstens einem der Absätze 1 bis 13, wobei das Substrat eine transparente Kunststofffolie aufweist.
15. (Bevorzugte Ausgestaltung) Verfahren nach wenigstens einem der Absätze 1 bis 14, wobei die erste Schicht eine Effektlackschicht oder eine flüssigkristalline Schicht ist.
16. (Bevorzugte Ausgestaltung) Verfahren nach wenigstens einem der Absätze 1 bis 15, wobei die Beschichtung zumindest eine Trennschicht umfasst.
17. (Bevorzugte Ausgestaltung) Verfahren nach Absatz 16, wobei es sich bei der Trennschicht um die erste auf das Substrat aufgebrachte Schicht handelt.

### Ausführliche Beschreibung der Erfindung

Der vorliegenden Erfindung liegt die Idee zugrunde, einen mehrschichtigen Prägelack, der zur Einprägung einer Mikrostruktur und insbesondere zur Einprägung einer Struktur mit einem optisch variablen Effekt als Sicherheitsmerkmal geeignet ist, so auf ein Substrat aufzubringen, dass ein UV-Lack mindestens zweischichtig aufgetragen wird, wobei die erste bzw. untere Schicht nach dem Auftragen vollständig gehärtet wird, sodass ein Ablegen bzw. Abscheiden auf dem Prägewerkzeug, z.B. einer Prägewalze, zuverlässig vermieden wird. Es wird bevorzugt, die erste Schicht dünn aufzutragen, vorzugsweise mit einem Auftragsgewicht in einem Bereich 0,3 g/m² bis 3 g/m², insbesondere bevorzugt in einem Bereich von 0,5 g/m² bis 1,5 g/m². Die Härtung der ersten Schicht erfolgt bevorzugt an der Luft, weil eine Härtung unter Inertbedingungen unter Umständen zu Benetzungsstörungen der folgenden Schicht führen kann und die Zwischenschichthaftung negativ beeinflußt. Es wurde festgestellt, dass auch im Falle einer Aushärtung der ersten Schicht bei geeigneter Wahl der Rohstoffe eine ausgezeichnete Zwischenschichthaftung im Mehrschichtaufbau erhalten werden kann. Das Auftragen der ersten Schicht erfolgt bevorzugt Inline.

Kommerziell erhältliche, druckvorbehandelte bzw. chemisch vorbehandelte Polyesterfolien (insbesondere Polyethylenterephthalat-Folien), beispielsweise "Mylar 813" von Dupont, "RNK 2600" oder "2CSR" von Mitsubishi, "Sarafil" S60, S100 oder S40 von TPL, sind optimiert für die Bedruckung mit UV-Druckfarben in dünnen Schichten (ca. 1 bis 2 g/m²). Die Vorbehandlung (bzw. "Pre-Treatment") kann z.B. auf vernetztem Acrylat beruhen. Diese Originaldruckvorbehandlung kann in ihrer Wirkung mittels des erfindungsgemäßen Verfahrens durch den Druck der ersten UV-Lackschicht verstärkt werden. Überraschenderweise wurde gefunden, dass auf dieser dünnen Lackschicht auf der Folie eine dicke Prägelackschicht wesentlich besser verankert wird, als sie auf der Folie alleine verankern würde.

Die zweite UV-härtende Schicht wird in dieser Schrift auch als "UV-Prägelack" oder "Prägelackschicht" bezeichnet. Anstelle der ersten UV-härtenden Schicht wird in dieser Schrift auch von einer "haftvermittelnden Schicht" gesprochen.

Besonders dicke Schichten sind interessant, weil sich diese üblicherweise nur schwer auf der Folie verankern lassen (im Gegensatz zu dünnen Schichten). Die Schichtdicke der zweiten UV-härtenden Schicht beträgt bevorzugt 2 µm bis 15 µm, besonders bevorzugt 3 µm bis 8 µm.

Als UV-Prägelack (d.h. als zweite UV-härtende Schicht) kommen insbesondere radikalisch oder kationisch härtende UV-Lacke in Frage. Die haftvermittelnde Schicht (d.h. die erste UV-härtende Schicht) kann entweder die gleiche Beschaffenheit wie der UV-Prägelack aufweisen, oder aus einem anderen UV-Lack bestehen. Speziell die haftvermittelnde Schicht kann auch thermoplastische Rohstoffe enthalten, z.B. Rohstoffe, wie im Kapitel "Saturated Resins", Chemistry & Technology of UV & EB Formulation for Coatings, Inks & Paints, Volume II, Prepolymers & Reactive Diluants, Edited by G. Webster, John Wiley & Sons, 1997, ISBN 0471978914, Seite 196ff beschrieben.

Typische UV-Lacke enthalten folgende Bestandteile (siehe Tabelle 1):

**Tabelle 1:**

| Bestandteil | Bevorzugter Bereich (Gew.-%) | Insbesondere bevorzugt (Gew.-%) |
|---|---|---|
| Präpolymere | 0 bis 99,9 | 15 bis 60 |
| Reaktivverdünner | 0 bis 99,9 | 15 bis 60 |
| Gesättigte Harze | 0 bis 30 | 0 bis 15 |
| Flüchtige Lösungsmittel | 0 bis 99,9 | 0 bis 20 |
| Photoinitiatoren | 0,1 bis 15 | 0,5 bis 10 |
| Aminsynergisten oder Thiole | 0 bis 10 | 0 bis 10 |
| Additive | 0 bis 10 | 0,1 bis 2 |

Die Bestandteile "Präpolymere" und "Reaktivverdünner" sind nicht scharf abgrenzbar, weil es Reaktivverdünner gibt, die von manchen Anbietern auch als Präpolymere bezeichnet werden. Man kann bereits aus TMP(EO)₉TA bzw. 9-fach ethoxyliertem Trimethylolpropantriacrylat (95 Gew.-%) und "Darocur 1173" (5 Gew.-%) einen Lack mit akzeptablen Eigenschaften herstellen, wobei TMP(EO)₉TA sowohl als Reaktiwerdünner, als auch als Präpolymer bezeichnet werden kann.

Durch das erfindungsgemäße Verfahren kann jede Schicht an eine bestimmte Funktion, wie Release-Fähigkeit, Flexibilität oder Kratzbeständigkeit, optimal angepasst werden. Additive können gezielt in der Schicht eingesetzt werden, in der sie jeweils gebraucht werden. Dadurch kann ein gutes Prägeverhalten erzielt werden, ohne die Überdruckbarkeit der Beschichtung zu gefährden.

Bei einem 3-Schichtsystem kann beispielsweise die erste Schicht mit einem mittleren Vernetzungsgrad ausgestattet werden, wodurch ein problemloser Release vom Trägermaterial bei der Weiterverarbeitung und eine gute Kratzbeständigkeit an der späteren Oberfläche erreicht werden. Die zweite Schicht kann hochflexibel und dehnfähig formuliert werden. Die dritte Schicht kann mit sehr guten Eigenschaften im Hinblick auf Prägbarkeit und Metallisierbarkeit ausgestattet werden. Durch die Wahl einer geringen Schichtdicke für die dritte Schicht wird beispielsweise erreicht, dass der gesamte Verbund auch bei hoher Härte und Vernetzung der dritten Schicht nicht spröde wird.

Durch die Ausstattung der einzelnen Schichten mit individuellen Eigenschaften wird eine Gesamtbeschichtung bereitgestellt, die alle für einen Prägelack gewünschten Eigenschaften aufweist. Dadurch wird z. B. auch die mechanische Beständigkeit der Beschichtung deutlich verbessert und eine verbesserte Schweißbeständigkeit nach Knittern erreicht. Unter Schweißbeständigkeit wird im Rahmen dieser Erfindung im Wesentlichen die Beständigkeit oder Haltbarkeit einer Reflexionsschicht verstanden, die für die Sichtbarkeit der Prägestrukturen, insbesondere der Beugungsstrukturen, verantwortlich ist. In vielen Fällen handelt es sich bei der Reflexionsschicht um eine z. B. aufgedampfte Metallschicht aus z. B. Aluminium, Kupfer, Chrom, Eisen, Nickel oder Legierungen dieser und anderer Metalle. Bei der Ermittlung der Schweißbeständigkeit wird nun die Beständigkeit der Reflexionsschicht gegenüber menschlichem Schweiß bestimmt. Dies wird durch entsprechende auf die Reflexionssschicht einwirkende Bedingungen, wie hohe Luftfeuchtigkeit, saure bzw. basisch eingestellte salzhaltige, wässerige Lösungen von z. B. NaCl, KCl, CuSO₄, etc. erreicht, die die korrosive Wirkung von menschlichem Schweiß zeitlich beschleunigt nachstellen.

Die Auftragung der einzelnen Schichten in dem erfindungsgemäßen Verfahren kann durch verschiedene an sich aus dem Stand der Technik bekannte Beschichtungsverfahren erfolgen. Neben einigen Druckverfahren, z. B. Tiefdruck, Flexodruck, Offsetdruck, kommen alle klassischen Verfahren zum Filmgießen und Beschichtungsverfahren infrage. So ist die Aufbringung z. B. mit Walzenbeschichtungsverfahren, Spaltbeschichtungsverfahren, Drahtrakelbeschichtungsverfahren, Slot Die Coating, Dip Coating, Spray Coating, Curtain Coating und Air Knife Coating möglich.

Die Aushärtung der erfindungsgemäßen Beschichtung insgesamt und auch die Aushärtung jeder einzelnen Schicht kann durch die aus dem Stand der Technik bekannten Verfahren erfolgen. Die Härtung wird durch Bestrahlung mit ultraviolettem Licht durchgeführt.

Gemäß der Erfindung wird daher die in der Beschichtung enthaltene strahlenvernetzbare Komponente durch ultraviolette Strahlung vernetzt. Vom spektralen Bereich her sind Eisen-dotierte Strahler besonders gut geeignet. Alternativ können Strahler mit undotiertem Quecksilber (Hg) oder Strahler mit Gallium(Ga)-Dotierung verwendet werden. Hg-Strahler weisen allerdings einen etwas ungünstigeren Spektralbereich auf, während Ga-Strahler eine schlechtere Oberflächenhärtung bewirken.

Gemäß einer weiteren bevorzugten Ausführungsform enthalten einzelne oder alle Schichten der Beschichtung einen Photoinitiator oder eine Photoinitiatorkombination. Die Vernetzung kann mithilfe eines Photoinitiators bzw. einer Photoinitiatorkombination auf besonders einfache Weise gestartet und kontrolliert werden. Bevorzugte Beispiele solcher Photoinitiatoren sind in nachfolgender Tabelle 2 angeführt.

**Tabelle 2:**

| Produktname | Hersteller | chemische Bezeichnung/ nähere Spezifikation |
|---|---|---|
| Darocur^{®} 4265 | BASF | Mischung aus 50 % 2,4,6-Trimethylbenzoyl-diphenylphosphinoxid und 50 % 2-Hydroxy-2-methyl-1-phenyl-propan-1-on |
| Darocur^{®} 1173 | BASF | 2-Hydroxy-2-methyl-1-phenyl-propan-1-on |
| Irgacure^{®} 500 | BASF | Mischung aus 50 Gew.-% 1-Hydroxycyclohexylphenylketon und 50 Gew.-% Benzophenon |
| Irgacure^{®} 184 | BASF | 1-Hydroxycyclohexylpheriylketon |
| Irgacure^{®} 250 | BASF | Iodonium, (4-Methylphenyl)[4-(2-methylpropyl)phenyl]-, hexafluorophosphat |
| Esacure KIP 100 F | Lamberti | Mischung aus Oligo[(2-Hydroxy-2-methyl-1-[4-(1-methylvinyl)phenyl]propanon] und 2-Hydroxy-2-methyl-1-phenyl-1-propan-1-on |
| Irgacure^{®} 2959 | BASF | 1-[4-(2-Hydroxyethoxy)-phenyl]-2-hydroxy-2-methyl-1-propan-1-on |
| Lucirin^{®} TPO | Bayer | 2,4,6-Trimethylbenzoyl-diphenylphosphinoxid |
| Darocure^{®} TPO | BASF | 2,4,6-Trimethylbenzoyl-diphenylphosphinoxid |
| Irgacure 819 | BASF | Phenylbis(2,4,6-trimethylbenzoyl)-phosphinoxid |
| Genocure^{™} ITX | Rahn | Isopropylthioxanthon |
| Omnirad ITX | IGM Resins Inc. | Isopropylthioxanthon |
| UVI-6992 | Dow Chemical Company | Mischung aus Triarylsulfoniumhexafluorophosphat-Salzen und Propylencarbonat |
| UVI-6976 | Dow Chemical Company | Mischung aus Triarylsulfoniumhexafluoroantimonat-Salzen und Propylencarbonat |

Die einzelnen Lackschichten können jeweils geeignet pigmentiert sein, wobei berücksichtigt werden muss, dass eine ausreichende UV-Transparenz des Gesamtsystems zur UV-Härtung gewahrt bleiben muss. Gemäß einer weiteren bevorzugten Ausführungsform der Erfindung sind daher in einer oder mehreren der Schichten der Beschichtung Pigmente enthalten. Besonders bevorzugt sind Ausführungsformen, in denen die einzelnen Schichten der Beschichtung jeweils unterschiedliche Pigmente enthalten. Bei den eingesetzten Pigmenten kann es sich z.B. um an sich aus dem Stand der Technik bekannte Farbpigmente oder um sogenannte Interferenzschichtpigmente handeln, die bei einem Betrachter einen betrachtungswinkelabhängigen Farbeindruck hervorrufen.

Das Auftreten von Lufteinschlüssen stellt allgemein ein Problem bei der Herstellung von Sicherheitselementen dar. Insbesondere bei hohen Bahngeschwindigkeiten an der Oberfläche der Prägung kann es zu Lufteinschlüssen kommen, da die Luft nicht schnell genug aus dem Prägespalt entweichen kann. Dadurch kommt es zu einem Verlust an Kontrast. Die Lösung dieses Problems kann zum einen durch die Verwendung einer Schicht mit niedriger Viskosität als oberster Schicht des Sicherheitselements erfolgen. Die hauptsächliche Lackverdrängung bei der Prägung findet dann in dieser Schicht statt, wodurch ein guter Kontrast erzeugt wird. Gemäß einer weiteren bevorzugten Ausführungsform der Erfindung weist die oberste Schicht des Sicherheitselements daher eine niedrige Viskosität auf.

Ein anderer Weg zur Vermeidung von Lufteinschlüssen in einer pigmentierten Schicht ist es, nicht die oberste, sondern die darunterliegende Schicht zu pigmentieren. Da die Lufteinschlüsse hauptsächlich die oberste und damit die in dieser Ausführungsform farblose Schicht betreffen, wird der Farbkontrast nicht beeinträchtigt. Nicht nur Hologramme, sondern auch andere mikrooptische Systeme, z. B. Mikrolinsen, können so vorteilhaft hergestellt werden.

Bei der ersten auf das Substrat aufgebrachten Schicht handelt es sich bevorzugt um eine Effektlackschicht oder um eine flüssigkristalline Schicht. Die Ausrichtung (Alignment) der Flüssigkristalle findet auf dem Substrat oder gegebenenfalls auf einer zusätzlichen Alignmentschicht statt, der Übergang zum isotropen Prägelack kann fließend erfolgen. Bei dieser Anwendung darf z. B. das flüssigkristalline Material auch so formuliert sein, dass es eigentlich eine Inertisierung bei der Vernetzung erfordern würde. Da das flüssigkristalline Material aber unter der Prägelackschicht oder den Prägelackschichten angeordnet ist, entfällt diese Bedingung, weil ein Sauerstoffzutritt ausgeschlossen ist.

Sofern die erste Schicht als flüssigkristalline Schicht ausgebildet ist, handelt es sich bevorzugt um eine doppelbrechende flüssigkristalline Schicht. Die flüssigkristalline Schicht ist dabei mit Vorteil als sogenannte "λ/4"-Schicht ausgebildet. Typischerweise kann eine solche doppelbrechende λ/4-Schicht durch Schichtstärken der (nematischen) Flüssigkristallschicht von ca. 1 µm realisiert werden.

Die flüssigkristalline Schicht kann bei Beaufschlagung mit elektromagnetischer Strahlung aber auch fluoreszieren, insbesondere polarisationsabhängig fluoreszieren. Häufig wird dabei sowohl die Anregung mit elektromagnetischer Strahlung als auch die Fluoreszenz polarisationsabhängig sein.

Besonders vorteilhaft sind des Weiteren flüssigkristalline Schichten, die doppelbrechend sind und zugleich polarisationsabhängig fluoreszieren.

Die Kombination doppelbrechender und/oder fluoreszierender Flüssigkristallschichten mit der zumindest einen geprägten Schicht, z.B. einem Hologramm oder einer sonstigen Beugungsstruktur, erhöht den Fälschungsschutz des Sicherheitselements ganz erheblich. Darüber hinaus ist insbesondere eine polarisationsabhängig fluoreszierende nematische Flüssigkristallschicht in Kombination mit einer geprägten Schicht für den Betrachter außerordentlich ansprechend, da er unterschiedliche polarisationsabhängig fluoreszierende Bereiche eines aus Flüssigkristallmaterial gebildeten Motivs unter Einsatz eines Polarisationsfilters verschiedenfarbig wahrnehmen kann, wenn die unterschiedlichen Flüssigkristallbereiche durch verschiedenfarbige Untergrundschichten hinterlegt sind. Durch Drehung des Polarisationsfilters kann der Betrachter die verschiedenfarbigen Bereiche quasi "ein- und ausschalten".

Bevorzugt im Rahmen der vorliegenden Erfindung sind außerdem Ausführungsformen, bei denen eine oder mehrere Schichten der Beschichtung als Diffraktionsschicht, Klebeschicht, Haftvermittlerschicht und/oder Dekorschicht ausgebildet sind.

Im Sinne der vorliegenden Erfindung reicht es grundsätzlich aus, wenn das Substrat des Sicherheitselements teilweise mit der zumindest zwei Schichten umfassenden Beschichtung ausgestattet ist. Es ist aber auch möglich, das gesamte Sicherheitselement mit der Beschichtung zu versehen.

In einer bevorzugten Ausgestaltung ist das Sicherheitselement in Form eines Sicherheitsbandes ausgebildet, das zur vollständigen oder teilweisen Einbettung in ein Sicherheitspapier oder ein Wertdokument bestimmt ist.

In anderen ebenfalls vorteilhaften Ausgestaltungen ist das Sicherheitselement in Form eines Sicherheitsstreifens, eines Patches oder eines sonstigen flächigen Sicherheitselements ausgebildet.

Gemäß einer weiteren bevorzugten Ausführungsform der vorliegenden Erfindung weist das Sicherheitselement eine Dicke von 1 µm bis 50 µm, bevorzugt eine Dicke von 5 µm bis 20 µm, besonders bevorzugt eine Dicke von rund 12 µm auf. Dabei handelt es sich um die bei der Ausstattung von Wertdokumenten und Sicherheitspapieren mit Sicherheitselementen leicht handhabbaren Dicken der Sicherheitselemente.

Bevorzugt ist das Substrat des erfindungsgemäßen Sicherheitselements flexibel ausgestaltet. Eine Flexibilität des Sicherheitselements ist häufig erwünscht, da auch die mit dem Sicherheitselement ausgestatteten Wertdokumente, wie z. B. Banknoten oder Urkunden, häufig flexibel sind.

Nach einer anderen bevorzugten Ausgestaltung ist das Sicherheitselement zusätzlich mit einem Druckbild, insbesondere mit Positiv- oder Negativmustern oder Positiv- oder Negativzeichen versehen. Das Sicherheitselement kann als weitere Sicherheitsmerkmale auch Fluoreszenzstoffe, Phosphoreszenzstoffe oder magnetische Stoffe enthalten.

Bevorzugt wird als Substrat des erfindungsgemäßen Sicherheitselements eine transparente Kunststofffolie verwendet. Solche Folien haben den Vorteil, dass die Bestrahlung mit UV-Licht durch die Folie hindurch vorgenommen werden kann. So ist beispielsweise eine Folie aus Polyethylenterephthalat (PET) ausgehend vom sichtbaren Bereich im UV-Bereich bis ca. 310 nm transparent. Zur Bestrahlung können daher mit Vorteil handelsübliche UV-Strahler einsetzt werden.

Die als Substrat eingesetzte Kunststofffolie ist bevorzugt monoaxial, besonders bevorzugt biaxial orientiert, was ihre Festigkeit erhöht und ihr polarisierende Eigenschaften verleiht. Als Folienmaterial können neben Polyester, insbesondere PET bzw. Polyethylenterephthalat, auch viele andere Kunststoffe, wie z. B. Polyethylennaphthalat (PEN), Polyolefine, insbesondere orientiertes Polypropylen (OPP), Polyamide, Polyimide, Kevlar^{®} sowie deren Copolymere und/oder Mischungen eingesetzt werden. Die Verwendung von chemisch vorbehandelten bzw. druckvorbehandelten Polyesterfolien, insbesondere Polyethylenterephthalat-Folien, wird besonders bevorzugt. Die Vorbehandlung (bzw. "Pre-Treatment") kann z.B. auf vernetztem Acrylat beruhen.

Bevorzugt umfasst das Sicherheitselement außerdem zusätzlich wenigstens ein visuell und/oder maschinell prüfbares Sicherheitsmerkmal. Neben den bereits genannten Fluoreszenz-, Phosphoreszenz- und magnetischen Stoffen kommen ferner sämtliche Elemente in Betracht, die visuell und/oder maschinell prüfbar sind, also z. B. optisch variable Interferenzschichtpigmente oder Mikrolinsenanordnungen.

Die vorliegende Erfindung umfasst auch ein Sicherheitspapier für die Herstellung von Sicherheits- oder Wertdokumenten, wie Banknoten, Schecks, Ausweiskarten, Urkunden oder dergleichen, das mit einem oben beschriebenen Sicherheitselement ausgestattet ist. Umfasst ist auch ein Sicherheitspapier für die Herstellung von Wertgegenständen, wie Markenartikel oder dergleichen, das mit einem oben beschriebenen Sicherheitselement ausgestattet ist.

Bei dem Papier, das mit einem erfindungsgemäßen Sicherheitselement ausgestattet werden kann, handelt es sich bevorzugt um ein Baumwoll-Velinpapier. Selbstverständlich kann aber auch Papier eingesetzt werden, welches einen Anteil X polymeren Materials im Bereich von 0 < X < 100 Gew.-% enthält.

Alternativ können ferner papierähnliche Materialien, z.B. Kunststoffe, anstelle des Papiers eingesetzt werden.

Ebenso ist von der vorliegenden Erfindung ein Wertgegenstand, wie Banknote, Pass, Kreditkarte, Ausweisdokument, Markenartikel oder dergleichen, mit einem derartigen Sicherheitselement umfasst.

Die vorliegende Erfindung umfasst auch ein Verfahren zur Herstellung eines Sicherheitspapiers oder Wertgegenstandes, wobei das Sicherheitspapier oder der Wertgegenstand mit einem oben beschriebenen Sicherheitselement ausgestattet wird.

Die vorliegende Erfindung umfasst daneben die Verwendung der oben beschriebenen Sicherheitselemente zur Produktsicherung, zur Herstellung von Folienverbund-Banknoten und als Verpackungsmaterial.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet. Es zeigen:
- Fig. 1: eine schematische Darstellung eines erfindungsgemäßen Sicherheitselements mit einer aus zwei Schichten bestehenden Beschichtung im Querschnitt;
- Fig. 2: eine schematische Darstellung eines erfindungsgemäßen Sicherheitselements mit einer aus drei Schichten bestehenden Beschichtung im Querschnitt;
- Fig. 3: eine schematische Darstellung eines Sicherheitselements mit einem eingeprägten Sicherheitsmerkmal im Querschnitt.

### Beispiel 1: Sicherheitselement mit einer aus zwei Schichten bestehenden Beschichtung

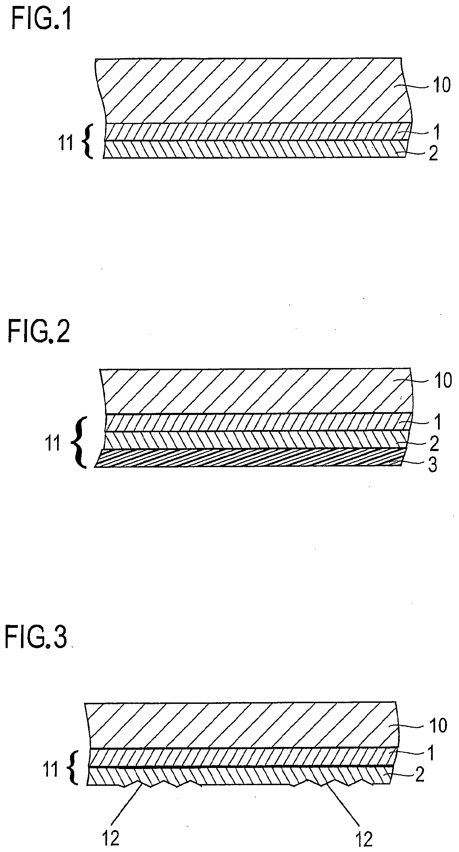

Fig. 1 zeigt im Querschnitt eine schematische Darstellung eines Sicherheitselements mit einer aus zwei Schichten 1, 2 bestehenden Beschichtung 11. Zur Herstellung des Sicherheitselements wird als Schicht 1 eine Schicht aus einem speziellen UV-Lack auf ein Substrat 10 mittels Tiefdruck in einer Schichtdicke von etwa 1 µm aufgetragen. Als Substrat wird eine druckvorbehandelte Folie des Typs "Mylar M813" eingesetzt. Der spezielle UV-Lack hat die folgende Zusammensetzung (siehe Tabelle 3).

**Tabelle 3:**

| | |
|---|---|
| TMP(EO)₉TA (9-fach ethoxyliertes Trimethylolpropantriacrylat) "SR 502", Fa. SARTOMER | 45 Gew.-% |
| TPGDA (Tripropylenglykoldiacrylat) "SR306", Fa. SARTOMER | 10 Gew.-% |
| DPGDA (Dipropylenglykoldiacrylat) "SR 508", Fa. SARTOMER | 40 Gew.-% |
| Lamberti KIP 100 F | 5 Gew.-% |

Die Zugabe weiterer Bestandteile, wie z.B. weitere Photoinitiatoren, Aminsynergisten, Thiole und/oder Additive, ist möglich, die Prozentzahlen müssten entsprechend angepasst werden.

Der aufgetragene UV-Lack wird mit UV-Strahlung gehärtet. Anschließend wird eine als Prägelack fungierende UV-Dispersion als Schicht 2 aufgetragen, im Beispiel mit einem höheren Auftragsgewicht (5 g/m²). Die Schicht 2 kann auf der gleichen Zusammensetzung wie Schicht 1 beruhen. Alternativ kann die Schicht 2 auf einem anderen UV-Lack basieren, der sich im Prägeprozess günstig verhält. Die Schicht 2 kann z.B. auf der folgenden Zusammensetzung beruhen (siehe Tabelle 4).

**Tabelle 4:**

| | |
|---|---|
| Multifunktionelles Urethanacrylat | 25 Gew.-% |
| Aminmodifiziertes Polyesteracrylat | 23 Gew.-% |
| TPGDA | 40 Gew.-% |
| Darocur 1173 | 6,5 Gew.-% |
| Irgacure 819 | 0,5 Gew.-% |
| Aminsynergist | 5 Gew.-% |

Nach der Prägung der Schicht 2 werden beide Schichten 1, 2 durch Einwirkung von UV-Strahlung vernetzt, wodurch eine unschmelzbare Beschichtung 11 entsteht.

### Beispiel 2: Sicherheitselement mit einer aus drei Schichten bestehenden Beschichtung

Fig. 2 zeigt im Querschnitt eine schematische Darstellung eines Sicherheitselements mit einer aus drei Schichten 1, 2, 3 bestehenden Beschichtung 11. Auf das Substrat 10, im Beispiel auf eine Kunststofffolie 10 aus z. B. PET oder OPP, wird in einem ersten Schritt eine Schicht 1 aufgebracht, die nach der Applikation die Oberfläche des Sicherheitselements bildet. Die Zusammensetzung dieser Schicht lautet:

**Tabelle 5:**

| Produktname | Hersteller | chemische Bezeichnung / nähere Spezifikation | Anteil/ Gew.-% |
|---|---|---|---|
| Ebecryl^{™} 83 (Eb 83) | Allnex | Polyetheracrylatoligomer | 60 |
| TPGDA | Rahn oder Sartomer | Tripropylenglykoldiacrylat | 35 |
| Darocur^{®} 1173 | BASF | 2-Hydroxy-2-methyl-1-phenyl-propan-1-on | 5 |

Die Kratzfestigkeit dieser Schicht kann durch Wachse und nanoskalige Additive, z. B. SiO₂, erhöht werden. Der Einsatz inerter Harze in dieser Schicht kann später die Überdruckbarkeit vorteilhaft beeinflussen, da zumindest diese Komponenten von der Druckfarbe angelöst werden können. Als inerte Harze kommen z. B. die auf S. 197, Table XXIX, "Saturated Resins that can be utilised in UV Formulations", Volume II, Prepolymers & Reactive Diluents, Chemistry & Technology of UV & EB Formulation for Coatings, Inks & Paints, Wiley, 2nd Edition, ISBN 0471978914 genannten Rohstoffe infrage. Bei Einsatz inerter Harze muss entsprechend der Reaktivverdünneranteil erhöht werden, um eine verarbeitbare Viskosität zu erhalten.

Nach UV-Härtung der beschriebenen ersten Schicht 1 wird eine Schicht 2 als hochflexible Zwischenschicht aufgebracht. Die Zusammensetzung dieser Schicht lautet:

**Tabelle 6:**

| Produktname | Hersteller | chemische Bezeichnung/ nähere Spezifikation | Anteil/ Gew.-% |
|---|---|---|---|
| Ebecryl^{™} 270 (Eb 270) | Allnex | Urethanacrylatoligomer (aliphatisch) | 25 |
| Ebecryl^{™} 265 (Eb 265) | Allnex | Urethanacrylatoligomer (aliphatisch, trifunktional) | 30 |
| Genomer 1122 | Rahn | Urethanacrylat (monofunktional) | 40 |
| Darocur^{®} 1173 | BASF | 2-Hydroxy-2-methyl-1-phenyl-propan-1-on | 5 |

Diese hochflexible Zwischenschicht enthält also hauptsächlich monofunktionelle und difunktionelle Rohstoffe. Urethanacrylate erzeugen in der Regel eine sehr hohe Flexibilität der Zwischenschicht. Die Flexibilität und Viskosität der Schicht 2 kann innerhalb gewisser Grenzen durch die Mengenverhältnisse von Eb 270 zu Eb 265 gesteuert werden. Eine höhere Vernetzung kann erhalten werden, wenn Genomer 1122 durch TPGDA ersetzt wird. Grundsätzlich kann die Viskosität durch Erhöhung der Anteile an Reaktivverdünner gesenkt werden.

Nach UV-Härtung der beschriebenen zweiten Schicht 2 wird die zu prägende und später zu metallisierende Schicht 3 aufgebracht. Die Zusammensetzung der Schicht 3 lautet:

**Tabelle 7:**

| Produktname | Hersteller | chemische Bezeichnung/ nähere Spezifikation | Anteil/ Gew.-% |
|---|---|---|---|
| Ebecryl^{™} 130 (Eb 130) | Allnex | Tricyclodecandimethanoldiacrylat | 25,0 |
| Sartomer 238 (HDDA) | Sartomer | 1,6-Hexandioldiacrylat | 10,0 |
| Miramer 600 (DPHA) | Rahn | Dipentaerithritholhexacrylat | 5,0 |
| Ebecryl^{™} 220 (Eb 220) | Allnex | Urethanacrylatoligomer (arometisch, hexafunktional) | 40,0 |
| Ebecryl^{™} 83 (Eb 83) | Allnex | Polyetheracrylatoligomer (multifunktional) | 11,8 |
| Darocur^{®} 1173 | BASF | 2-Hydroxy-2-methyl-1-phenyl-propan-1-on | 8,0 |
| Irgacure^{™} 369 (IR 369) | BASF | 2-Benzyl-2-dimethylamino-1-(4-morpholinophenyl)-butanon | 0,2 |

Durch die Verwendung multifunktioneller Verbindungen (Eb 220, hexafunktionelles DPHA) wird eine starke Vernetzung erreicht. Der durch die starke Vernetzung verursachte Schrumpf und der Einsatz von HDDA erleichtern den Release aus dem Prägewerkzeug.

### Beispiel 3: Sicherheitselement mit einer aus drei Schichten bestehenden Beschichtung

Fig. 2 zeigt im Querschnitt eine schematische Darstellung eines Sicherheitselements mit einer aus drei Schichten 1, 2, 3 bestehenden Beschichtung 11. Auf das Substrat 10, im Beispiel auf eine Kunststofffolie 10 aus z. B. PET oder OPP, wird in einem ersten Schritt die Schicht 1 aufgebracht, die nach der Applikation die Oberfläche des Sicherheitselements bildet. Die Zusammensetzung dieser Schicht lautet:

**Tabelle 8:**

| Produktname | Hersteller | chemische Bezeichnung/ nähere Spezifikation | Anteil/ Gew.-% |
|---|---|---|---|
| Cyracure^{™} UVR-6110 | Dow Chemical Company | Epoxidharz (cycloaliphatisch) | 77,0 |
| Castor Oil | Gustav Heess | Rizinusöl | 11,0 |
| | Oleochemische | | |
| | Erzeugnisse GmbH | | |
| n-Propanol | OXEA Deutschland | n-Propanol | 5,0 |
| UVI-6992 | Dow Chemical Company | Mischung aus Triarylsulfoniumhexafluorophosphat-Salzen und Propylencarbonat | 7,0 |

Nach UV-Härtung der beschriebenen ersten Schicht 1 wird eine Schicht 2 als flexible Zwischenschicht aufgebracht. Die Zusammensetzung dieser Schicht lautet:

**Tabelle 9:**

| Produktname | Hersteller | chemische Bezeichnung/ nähere Spezifikation | Anteil/ Gew.-% |
|---|---|---|---|
| Cyracure^{™} UVR-6110 | Dow Chemical Company | Epoxidharz (cycloalipathisch) | 81,0 |
| UVI-6992 | Dow Chemical Company | Mischung aus Triarylsulfoniumhexafluorophosphat-Salzen und Propylencarbonat | 9,0 |
| DVE-3 | BASF Corporation | Triethylenglycoldivinylether | 10,0 |

Alternativ weist die flexible Zwischenschicht 2 folgende Zusammensetzung auf.

**Tabelle 10:**

| Produktname | Hersteller | chemische Bezeichnung/nähere Spezifikation | Anteil/Gew.-% |
|---|---|---|---|
| Cyracure^{™} UVR-6128 | Dow Chemical Company | Epoxidharz (cycloaliphatisch) | 69,0 |
| UVI-6992 | Dow Chemical Company | Mischung aus Triarylsulfoniumhexafluorophosphat-Salzen und Propylencarbonat | 4,0 |
| TONE^{™} 0305 | Dow Chemical Company | Polyol (trifunktional) | 27,0 |

Nach UV-Härtung der beschriebenen zweiten Schicht 2 wird die zu prägende und später zu metallisierende Schicht 3 aufgebracht. Die Zusammensetzung der Schicht 3 lautet:

**Tabelle 11:**

| Produktname | Hersteller | chemische Bezeichnung/ nähere Spezifikation | Anteil/ Gew.-% |
|---|---|---|---|
| Cyracure^{™} UVR-6110 | Dow Chemical Company | Epoxidharz (cycloalipathisch) | 60,0 |
| TMPO^{®} | Perstorp Specialty Chemicals AB | Trimethylolpropanoxetan | 20,0 |
| Boltorn H2004 | Perstorp Specialty Chemicals AB | dendritisches Polymer mit hoher Hydroxylfunktionalität | 16,0 |
| Irgacure^{®} 250 | BASF | Idonium, (4-Methylphenyl)[4-(2-methylpropyl)phenyl]-, hexafluorophosphat | 3,5 |
| Genocure^{™} ITX | Rahn | Isopropylthioxanthon | 0,5 |

Die beschriebenen kationisch härtenden Beschichtungen können mit radikalisch härtenden Systemen kombiniert werden. Vorteilhaft ist es für die Zwischenhaftung, wenn Prepolymere, Reaktivverdünner oder Photoinitiatoren mit freier OH-Funktionalität vorhanden sind, wie z. B. Epoxidacrylate, Pentaerithritoltriacrylat, Dipentaerithritolpentaacrylat und alpha-Hydroxyketone. Auch können vorteilhafterweise Photoinitiatoren, wie z. B. Darocur^{®} 1173, vorhanden sein.

### Beispiel 4: Sicherheitselement mit einer aus zwei Schichten bestehenden Beschichtung

Fig. 3 zeigt im Querschnitt eine schematische Darstellung eines Sicherheitselements mit einer aus zwei Schichten 1, 2 bestehenden Beschichtung 11. Mögliche Zusammensetzungen der Schichten 1 und 2 sind vorstehend bei den Beispielen 1, 2 und 3 beschrieben. In die Schicht 2 wird eine Beugungsstruktur 12 eingeprägt. Anschließend erfolgt die Härtung der Beschichtung 11 durch Einwirkung von UV-Strahlung.

## Patentansprüche

1. Verfahren zur Herstellung eines Sicherheitselements für ein Sicherheitspapier, Wertdokument oder dergleichen, umfassend ein Substrat, das zumindest teilweise mit einer zumindest zwei Schichten umfassenden, geprägten Beschichtung ausgestattet ist, mit den Schritten:
a) Aufbringen einer ersten UV-härtenden Schicht, die eine Lackschicht ist, auf das Substrat;
b) vollständiges Härten der ersten UV-härtenden Schicht;
c) Aufbringen zumindest einer zweiten UV-härtenden Schicht, die eine Lackschicht ist, auf die vollständig gehärtete erste Schicht; **dadurch gekennzeichnet, dass** das Verfahren die weiteren folgenden Schritte aufweist:
d) Prägen der zuletzt aufgebrachten UV-härtenden Schicht mit einem Prägewerkzeug, wobei eine Mikrostruktur eingeprägt wird;
e) Härten der Beschichtung,
wobei das Härten der Schichten durch ultraviolette Strahlung erfolgt und wobei durch das vollständige Härten der ersten UV-härtenden Schicht ein Ablegen auf dem Prägewerkzeug vermieden wird.

2. Verfahren nach Anspruch 1, wobei nach dem Schritt c) und vor dem Schritt d) eine dritte UV-härtende Schicht, die eine Lackschicht ist, auf die zweite Schicht aufgebracht wird, wobei vor dem Aufbringen der dritten Schicht ein vollständiges Härten der zweiten Schicht erfolgt.

3. Verfahren nach Anspruch 2, wobei nach dem Aufbringen der dritten Schicht weitere UV-härtende Schichten über der dritten Schicht aufgebracht werden und vor dem Aufbringen der einzelnen Schichten jeweils ein vollständiges Härten der jeweils zuvor aufgebrachten Schicht erfolgt.

4. Verfahren nach wenigstens einem der Ansprüche 1 bis 3, wobei vor dem Prägen eine teilweise Härtung der obersten Schicht erfolgt.

5. Verfahren nach wenigstens einem der Ansprüche 1 bis 4, wobei das Aufbringen der Schichten durch ein oder mehrere Verfahren, ausgewählt aus der Gruppe bestehend aus Walzenbeschichtungsverfahren, Spaltbeschichtungsverfahren, Drahtrakelbeschichtungsverfahren, Slot Die Coating, Dip Coating, Spray Coating, Curtain Coating, Air Knife Coating und Druckverfahren, insbesondere Tiefdruck, Flexodruck oder Offsetdruck, erfolgt.

6. Verfahren nach wenigstens einem der Ansprüche 1 bis 5, wobei das Härten der Schichten durch zusätzliche Temperaturerhöhung erfolgt.

7. Verfahren nach wenigstens einem der Ansprüche 1 bis 6, wobei im Schritt d) eine Struktur mit einem optisch variablen Effekt, besonders bevorzugt eine Mikrospiegelstruktur, eine Mikrolinsenstruktur oder eine Mikrosprismenstruktur, eingeprägt wird.

8. Verfahren nach einem der Ansprüche 1 bis 7, wobei das Sicherheitselement in Form eines Sicherheitsbandes oder Sicherheitsstreifens ausgebildet ist.

9. Verfahren nach einem der Ansprüche 1 bis 7, wobei das Sicherheitselement in Form eines Patches oder eines sonstigen flächigen Sicherheitselements ausgebildet ist.

10. Verfahren nach einem der Ansprüche 1 bis 9, wobei eine oder mehrere der Schichten Pigmente, Farb-Pigmente, Fluoreszenzstoffe, Phosphoreszenzstoffe oder magnetische Stoffe enthalten.

11. Verfahren nach einem der Ansprüche 1 bis 10, wobei in zumindest einer Schicht der Beschichtung zumindest eine strahlenvernetzbare Komponente enthalten ist.

12. Verfahren nach einem der Ansprüche 1 bis 11, wobei in allen Schichten der Beschichtung jeweils zumindest eine strahlenvernetzbare Komponente enthalten ist.

13. Verfahren nach Anspruch 11 oder 12, wobei in zumindest einer Schicht der Beschichtung zumindest ein Photoinitiator enthalten ist oder in allen Schichten der Beschichtung jeweils zumindest ein Photoinitiator enthalten ist.

14. Verfahren nach wenigstens einem der Ansprüche 1 bis 13, wobei das Substrat eine transparente Kunststofffolie aufweist.

15. Verfahren nach wenigstens einem der Ansprüche 1 bis 14, wobei die erste Schicht eine Effektlackschicht oder eine flüssigkristalline Schicht ist.

16. Verfahren nach wenigstens einem der Ansprüche 1 bis 15, wobei die Beschichtung zumindest eine Trennschicht umfasst.

17. Verfahren nach Anspruch 16, wobei es sich bei der Trennschicht um die erste auf das Substrat aufgebrachte Schicht handelt.

## Claims

1. A method for manufacturing a security element for a security paper, value document or the like, comprising a substrate which is at least partially equipped with an embossed coating comprising at least two layers, having the steps of:
a) applying a first UV-curing layer, which is a lacquer layer, to the substrate;
b) complete curing of the first UV-curing layer;
c) applying at least one second UV-curing layer, which is a lacquer layer, to the completely cured first layer; **characterized in that** the method has the following further steps of:
d) embossing the last applied UV-curing layer with an embossing tool, wherein a microstructure is embossed;
e) curing the coating; wherein the curing of the layers is effected by ultraviolet radiation, and wherein laying onto the embossing tool is avoided by completely curing of the first UV-curing layer.

2. The method according to claim 1, wherein after step c) and before step d), a third UV-curing layer, which is a lacquer layer, is applied to the second layer, wherein the complete curing of the second layer is effected before the application of the third layer.

3. The method according to claim 2, wherein after the application of the third layer, further UV-curing layers are applied over the third layer, and the complete curing of the respectively previously applied layer is effected before the application of the individual layers.

4. The method according to at least one of claims 1 to 3, wherein a partial curing of the uppermost layer is effected before embossing.

5. The method according to at least one of claims 1 to 4, wherein the application of the layers is effected by one or several methods, chosen from the group consisting of roller coating methods, gap coating methods, wire doctor knife coating methods, slot die coating, dip coating, spray coating, curtain coating, air knife coating and printing methods, in particular gravure printing, flexographic printing or offset printing.

6. The method according to at least one of claims 1 to 5, wherein the curing of the layers is effected by additional temperature increase.

7. The method according to at least one of claims 1 to 6, wherein in step d) a structure with an optically variable effect, particularly preferably a micromirror structure, a microlens structure or a microsprism structure, is embossed.

8. The method according to any one of claims 1 to 7, wherein the security element is configured in the form of a security band or security strip.

9. The method according to any one of claims 1 to 7, wherein the security element is configured in the form of a patch or other areal security element.

10. The method according to any one of claims 1 to 9, wherein one or several of the layers contain pigments, color pigments, fluorescent substances, phosphorescent substances or magnetic substances.

11. The method according to any one of claims 1 to 10, wherein at least one radiation-crosslinkable component is contained in at least one layer of the coating.

12. The method according to any one of claims 1 to 11, wherein at least one radiation-crosslinkable component is contained in each of the layers of the coating.

13. The method according to claim 11 or 12, wherein at least one photoinitiator is contained in at least one layer of the coating or at least one photoinitiator is contained in each of the layers of the coating.

14. The method according to at least one of claims 1 to 13, wherein the substrate has a transparent plastic foil.

15. The method according to at least one of claims 1 to 14, wherein the first layer is an effect lacquer layer or a liquid-crystalline layer.

16. The method according to at least one of claims 1 to 15, wherein the coating comprises at least one separating layer.

17. The method according to claim 16, wherein the separating layer is the first layer applied to the substrate.

## Revendications

1. Procédé de fabrication d'un élément de sécurité pour un papier de sécurité, document de valeur ou objet similaire, comprenant un substrat doté au moins partiellement d'un revêtement gaufré comprenant au moins deux couches, comportant les étapes :
a) application d'une première couche durcissant par UV, qui est une couche de laque, sur le substrat ;
b) durcissement complet de la première couche durcissant par UV ;
c) application d'au moins une deuxième couche durcissant par UV, qui est une couche de laque, sur la première couche complètement durcie, **caractérisé en ce que** le procédé comporte les autres étapes suivantes :
d) gaufrage de la couche durcissant par UV appliquée en dernier lieu à l'aide d'un outil de gaufrage, cependant qu'une microstructure est gaufrée ;
e) durcissement du revêtement ;
cependant que le durcissement des couches a lieu par rayonnement ultraviolet, et dans lequel la pose sur l'outil de gaufrage est évitée par le durcissement complet de la première couche durcie aux UV.

2. Procédé selon la revendication 1, cependant que, après l'étape c) et avant l'étape d), une troisième couche durcissant par UV, qui est une couche de laque, est appliquée sur la deuxième couche, cependant que, avant l'application de la troisième couche, un durcissement complet de la deuxième couche a lieu.

3. Procédé selon la revendication 2, cependant que, après l'application de la troisième couche, d'autres couches durcissant par UV sont appliquées par-dessus la troisième couche, et que, avant l'application des différentes couches, respectivement un durcissement complet de la couche respectivement appliquée précédemment a lieu.

4. Procédé selon au moins une des revendications de 1 à 3, cependant que, avant le gaufrage, un durcissement partiel de la couche supérieure a lieu.

5. Procédé selon au moins une des revendications de 1 à 4, cependant que l'application des couches a lieu par un ou plusieurs procédés choisis parmi le groupe consistant en procédé de couchage au rouleau, procédé de revêtement par fente, procédé de revêtement au racleur en acier, Slot Die Coating, Dip Coating, Spray Coating, Curtain Coating, Air Knife Coating et procédé d'impression, en particulier impression en creux, flexographie ou impression offset.

6. Procédé selon au moins une des revendications de 1 à 5, cependant que le durcissement des couches a lieu par augmentation supplémentaire de température.

7. Procédé selon au moins une des revendications de 1 à 6, cependant que, à l'étape d), une structure ayant un effet optiquement variable, en particulier de préférence une structure à micro-miroirs, une structure à microlentilles ou une structure à micro-prismes est gaufrée.

8. Procédé selon une des revendications de 1 à 7, l'élément de sécurité étant réalisé sous forme d'une bande de sécurité ou d'un ruban de sécurité.

9. Procédé selon une des revendications de 1 à 7, l'élément de sécurité étant réalisé sous forme d'un patch ou d'un autre élément de sécurité en feuille.

10. Procédé selon une des revendications de 1 à 9, cependant qu'une ou plusieurs des couches contiennent des pigments, des pigments de couleur, des substances fluorescentes, des substances phosphorescentes ou des substances magnétiques.

11. Procédé selon une des revendications de 1 à 10, cependant que, dans au moins une couche du revêtement, au moins un composant réticulable par rayonnement est contenu.

12. Procédé selon une des revendications de 1 à 11, cependant que, dans toutes les couches du revêtement, respectivement au moins un composant réticulable par rayonnement est contenu.

13. Procédé selon la revendication 11 ou 12, cependant que, dans au moins une couche du revêtement, au moins un photo-initiateur est contenu, ou que, dans toutes les couches du revêtement, respectivement au moins un photo-initiateur est contenu.

14. Procédé selon au moins une des revendications de 1 à 13, cependant que le substrat comporte un film transparent en matière plastique.

15. Procédé selon au moins une des revendications de 1 à 14, cependant que la première couche est une couche de vernis à effets ou une couche cristalline liquide.

16. Procédé selon au moins une des revendications de 1 à 15, cependant que le revêtement comprend au moins une couche de séparation.

17. Procédé selon la revendication 16, cependant que la couche de séparation est la première couche appliquée sur le substrat.
